# EUROPEAN PATENT APPLICATION

(11) **EP 1 376 316 A1**
(43) Date of publication of application: **02.01.2004**
(21) Application number: 02254458.9
(22) Date of filing: 26.06.2002
(51) Int. Cl.: G06F 3/00

(54) **Haptic communications**

(71) Applicant: BRITISH TELECOMMUNICATIONS public limited company, London EC1A 7AJ (GB)
(72) Inventor: The designation of the inventor has not yet been filed

(57) **Abstract**

A haptic output device in combination with a network has its effective inertia increased by a controlling computer algorithm whereby potential latency effects of the network are damped out.

## Description

The present invention relates to haptic communications and more particularly to improving the response of haptic devices coupled by way of a telecommunications network.

Tactile output from computers has been used to enhance game playing to provide a "feel", for example vibration, thus adding an additional sensory perception to the games. Such outputs have also been used to enable visually impaired people to read documents and to feel drawings and the like. The basic operation of haptics output devices has been described in our co-pending European Patent Application No. 01305947.2 which disclosed a method for adapting haptic interface output characteristics to correct for per-person differences in the sense of touch. In a further European patent application no 01307951.2 there is disclosed a method of enabling reading of the Moon alphabet by use of a haptics output device. In the transmission of character sets from computers or data stores to haptics output devices there is unlikely to be any time critical activity dependant upon the output signals. However, where game play is involved, particularly if players are competing against each other or against the machine in a competitive manner, transmission delays of forward or reverse force parameters may have a significant impact on the sensed experience.

As game play is more likely to be carried out over a connectionless network, for example the internet or world wide web, rather than by a point to point communications link, signal latency may be introduced which can result in an inconsistency in the sensed movement of the output compared with the input.

Furthermore, sensory devices require frequent updates in both signal directions if the feel of the sensed movement and reaction to users response is to be realistic. The number of updates required to maintain realism, while not a problem where the haptic output device is in close proximity and direct connection to the generating processor, may result in the communications network overloading in a very short time and/or may require extreme allocations of bandwidth.

According to the present invention there is provided a method of activating a haptic output device of the kind responsive to signals defining directional force comprising receiving a series of signals defining a multiplicity of data packets, each packet defining a directional force applied at one location for transmission to the current location, determining from packet data the information defining a position to which a haptic output device is expected to move, using current positional data to generate output signals defining force and direction and applying a damping factor to said force and direction signals to slow the rate of movement from a previously defined position towards the current defined position.

Preferably the method includes signalling in each direction whereby haptic forces applied at one device in reaction to an applied force towards the current defined position are reflected to a corresponding device in the form of current positional signals in a series of return data packets.

A feature of the present invention provides an interactive haptic output terminal in combination with a bi-directional transmission arrangement, the terminal comprising at least a haptic output device and control means, said control means receiving signals from said haptic output device to determine a current position for said device, and to determine from signals received from said transmission arrangement a preferred current position for said haptic output device, said control mean determining an output force and direction required to move said haptic output device from the current position to the preferred position and further modifying said output force and direction using a damping factor to slow apparent movement between the positions and outputting signals defining the modified force and direction.

The control means will receive signals from the haptic output device containing data defining the position of said device at any particular time and will convert said data to signals for transmission to said bi-directional transmission arrangement at predetermined intervals.

The signals defining a preferred current position may be generated by an environment simulator, for example a programmed computer, or may be generated by a corresponding interactive output terminal at the opposed end of the transmission arrangement.

Where a series of packets defining preferred position are received, each packet defining a directional force applied at one location for transmission to the current location, the control means may include means to determine from packet data the sequence of transmission and re-ordering the data into a numerically correct series, extrapolating from previously received packets an anticipated linear movement to be defined by subsequently received packets and applying output directional force signals corresponding to said anticipated linear movement in respect of any missing data packet.

A haptics communications system using the method of the invention and incorporating the apparatus according to the invention will now be described by way of example only with reference to the accompanying drawings of which:
Figure 1 is a block schematic diagram of a first haptics communications system in which a network interconnects an environmental simulation to a haptics input/output device;
Figure 2 is a block schematic diagram of a haptics communications system having a plurality of interconnected haptics input/output devices;
Figure 3 is a schematic diagram of data interchange within the system of Figure 2;
Figure 4 is a schematic flow chart of the method of measuring latency between two locations to effect adjustment of the system of Figure 2;
Figure 5 is a schematic flow chart of the method of calculating forces to be applied locally;
Figure 6 is a schematic flow chart of one way of adapting the calculation of figure 5; and
Figure 7 shows a further adaptation of the algorithms of figures 5 and 6.

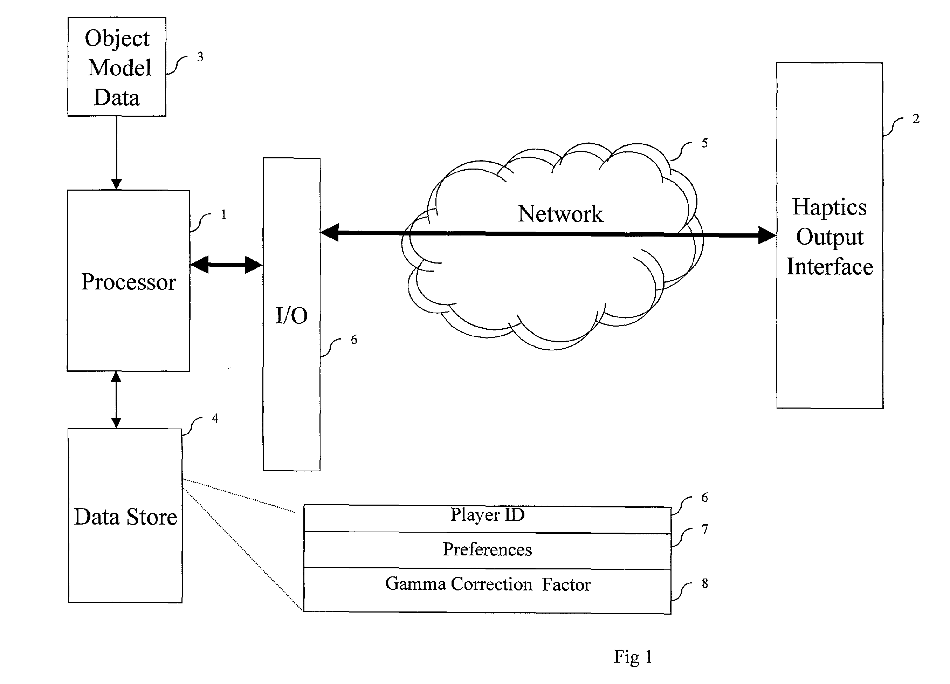

Referring to Figure 1, in our co-pending European patent application number 01305947.2, there is disclosed a method of providing a haptics output representation of a scene stored, for example, as object model data. In this case a processor 1 includes a program responsive to the position of a haptics output device (for example the Phantom 1.0 Haptic Output device from Sense Able Technologies Inc of the USA), to output reaction the forces based upon the object model data. The object model data stored in a data store 3 could define textures, surfaces and locations of fixed or moveable objects which could be perceived by a user of the haptics output interface 2. In some further developments disclosed in the preceding application information held in a data store 4 based upon a player identity 6 allowed player preferences 7 and a gamma correction factor 8 to be used to provide appropriate output adjustment to ensure that different players have approximately the same perception of the output at the haptics output interface 2.

As disclosed the processor 1 was closely coupled to the haptics output interface 2 and could therefore provide substantially continuous detection of location of the user's finger with respect to the x, y, z axes of the device thus allowing real time simulation of the environment defined by the object model data 3.

As hereinbefore mentioned, once a network 5 is introduced between the haptics output interface 2 and the processor 1 continuous communication of the virtual environment and responsive signalling determining the user's response and location by way of an input/output interface 6 to the processor 1 becomes impractical if one requires to update the signalling at substantially continuous rates. Furthermore, latency introduced to the signalling by the network results in an extremely jerky feel to the information being transmitted.

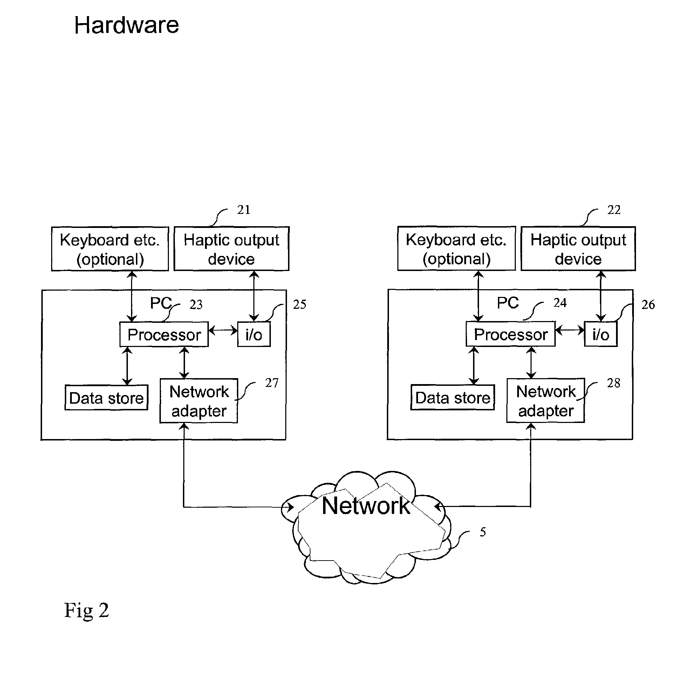

Turning now to Figure 2, where a plurality of haptic output devices 21, 22 are communicating by way of respective input/output interfaces 25, 26 to respective processors 23, 24 the problems of network latency and signalling limitations become more acute. Thus, if the processor 23 receives by way of a network adaptor 27 signals indicating a position for the haptic output device 22 and instantly seeks to move the haptic device 21 to that position accordingly a substantial jerk in the movement will be apparent. In any event, the user of the haptic output device 21 will be applying a backward force which may inhibit such movement and therefore prevent the processor 23 from aligning the position of the haptic output device 21 with that of the haptic output device 22. Correspondingly, the processor 23 in measuring the location of the haptic output device 21 will send signals back through the network 5 by way of network adaptor 28 to the processor 24, which will attempt to make a corresponding movement in the haptic output device 22. Thus, because the communication between haptic devices 21 and 22 is no longer of a continuous mode but is receiving and transmitting positional information at intervals the experience of the users will be significantly impaired. In addition, the period of time taken for signals to traverse the network (network latency) will further impair user perception.

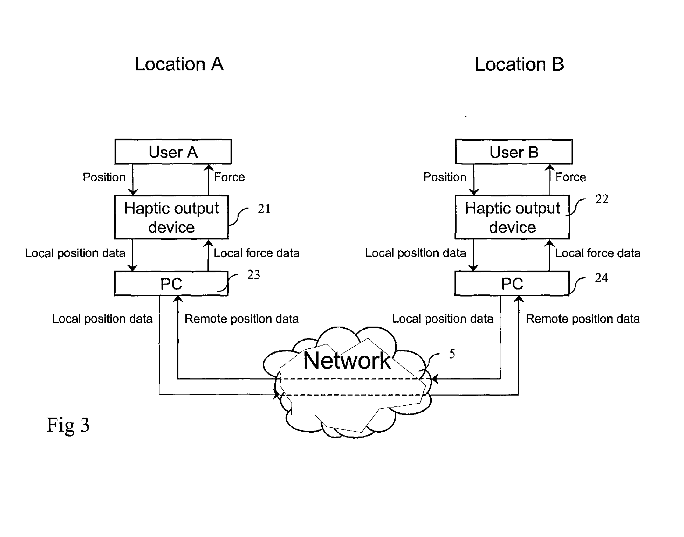

Thus considering also Figure 3, it is possible to perceive that if at a location A a user locates the haptic output device 21 "position" and receives a force from the haptic output device then the local position data derived from "position" is derived by the personal computer (PC) 23 and transmitted to the network. At the same time remote position data received from the network is translated by the PC 23 into local force data.

Corresponding position and force derivative data will also be used at location B by the PC 24.

In a practical network the position data and force output are transmitted between each end at approximately five millisecond intervals. Thus each time a new position is received a force is output in an attempt to move the output device to a new position, effectively with a motor pushing against the local user. In effect the user's at each end at positions A and B are coupled together and the two-way activity and data transmission effectively attempts to move both output devices 21 and 22 to corresponding positions. This simulates connection of the two users in a manner such as if they were connected together by some kind of resilience device, for example, a spring or flexible rod. Because there is a reactionary force at each end there can be instability between the two devices because of the effect of feed back loop so that deferred transmission of forces may result in an effective positive feedback.

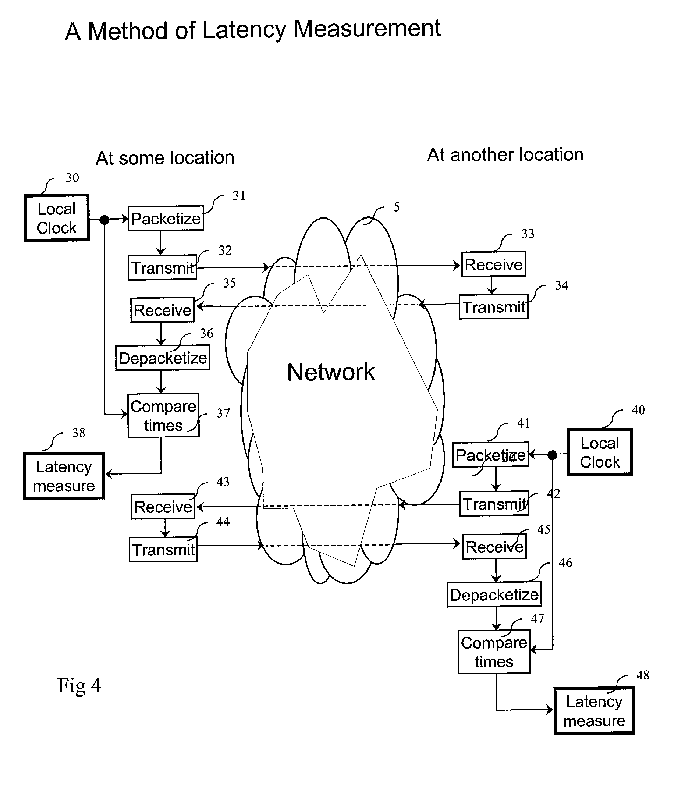

In the present invention latency induced instability is damped down by effectively introducing in the PCs 23 and 24 a simulated increase in the inertia of the respective connected haptic output device. Accordingly, turning to Figure 4, from each of the locations A and B the respective local clock 30 of the PCs 23,24 is used to determine the network latency. Thus, from location A the time from the local clock is bundled into a transmission packet, step 31, and transmitted at step 32 through the network 5. The packet is received at location B, step 33, and is immediately retransmitted at step 34 through the network 5 and is again received at step 35 at location A the received time stripped out (this being the time at which transmission first occurred) and the received time is compared again at step 37 with the local clock 30 to provide, at step 38, a usable measure of latency of the network 5.

Whilst it would be possible to transmit latency information across the network so that each end used the same latency, in the case of network variations a similar latency measurement may be carried out from location B as indicated using the respective local clock 40 to derive a latency measure by way of steps 41 to 47 corresponding to those of steps 31 to 37.

It will be noted that because only one clock is involved in determining the latency measurement synchronisation of the clocks across the two communicating systems is not required. It will of course be appreciated that the packetisation need not necessarily be of specific clock time but may simply be a serial number which is transmitted and received and a look up table is used to determine the time of transmission of the series number packet for comparison with the current time.

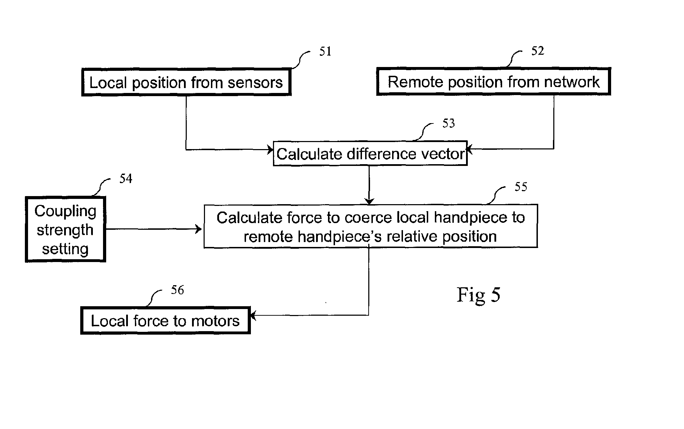

Turning now to Figure 5, once the latency in each direction has been determined, two methods of countering the latency problem may be used. In one instance a latency measurement is used to react negatively at the local end to modify the position data for transmission to the opposed end.

Considering Figure 5, in a typical haptic coupling across the network, local positions derived from the haptic output device sensors as indicated at step 51 and the remote position received from the network, step 52, are used to calculate differences and to provide difference vector (step 53) in respect of the x, y and z coordinates of the two haptic output devices. The coupling strength or resilience of the coupling between the two devices is then used (step 54) to calculate the force required to coerce the local haptic device to the relative position of the remote device (step 55) so that x, y and z vectors can be transmitted to provide the local force for motors at step 56.

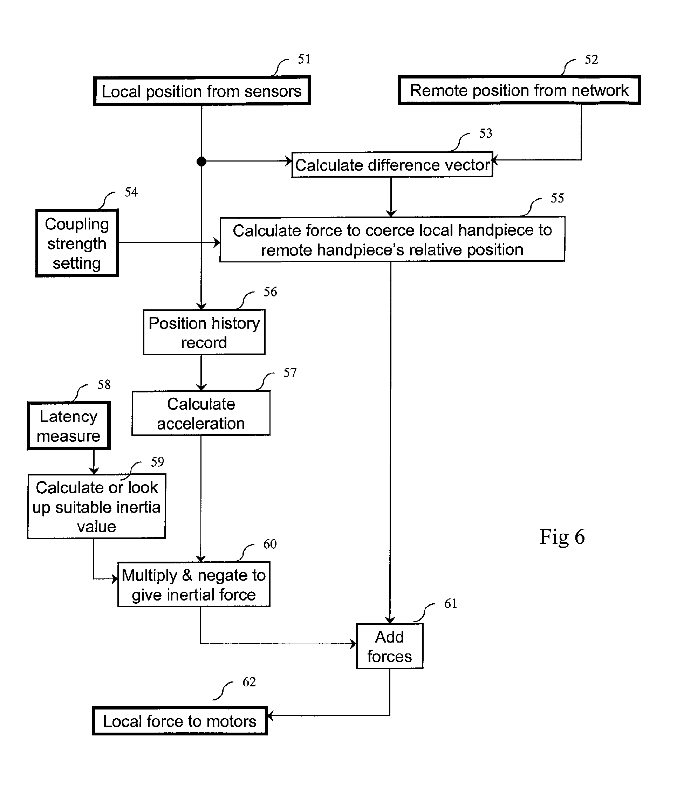

Referring now to Figure 6, particularly in the invention , after calculation of the force required to coerce a local hand piece to the remote hand pieces relative position, the position history record determining input movement is used to calculate acceleration, step 57, of the local haptic output device and the previously determined latency measure, step 58, is used to calculate an inertial value to be added in when determining the forces to be applied. In the alternative a look up table may be used to provide a link between a measured latency value and an appropriate inertial value. The acceleration and inertial values can now be used to provide an inertial force characteristic which can be used in combination with the calculated force for coercing the local hand piece to the remote hand piece relative position, step 61, so that the x, y and z forces output to the motors of the local haptics output device are now adjusted to take account of latency or output.

Thus any tendency towards jerkiness is slightly smoothed by the introduction of the inertial forces at step 60 and the probability of the establishment of a feed back loop substantially reduced.

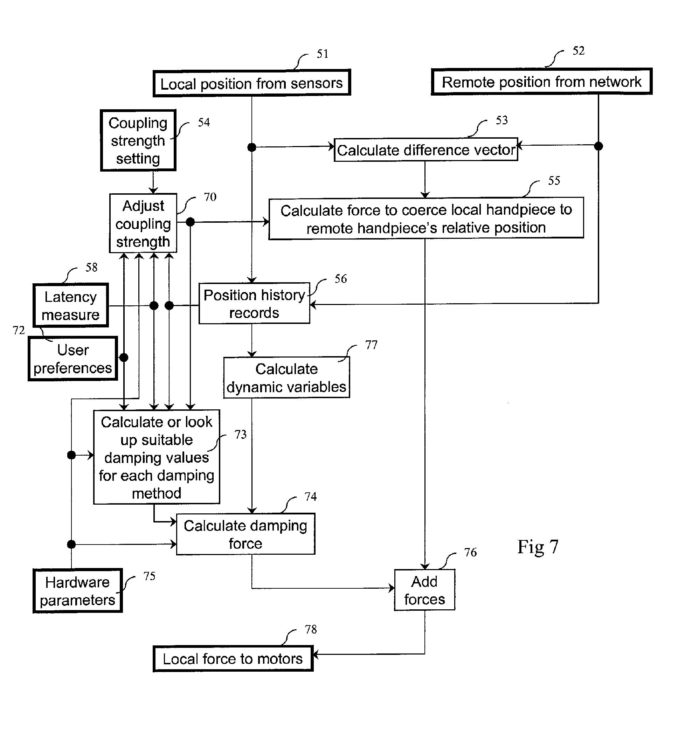

Turning to Figure 7, in a more complex arrangement it is possible to introduce in addition to coupling strengths on latency measurements user preferences. Thus, for example, in calculating the force required to coerce a local hand piece to the relative position of a remote sensor user preferences may affect the coupling strength 54, which can be adjusted (step 70) to take account of the position history and user preferences.

The user preferences 72 may also be used to amend damping values 73 and dynamic variables 77 including but not limited to acceleration can be calculated as before with damping force 74 being used to take account of local hardware parameters 75 as well as user preferences and latency with all such forces 76 contributing to the adaptation of the output signal data to local force motors 78.

The packets carrying the time information can be the same ones that carry the haptic effector position information. This has the advantage of ensuring the appropriate network stack delays for the position information are included in the measured latency and reduces the number of packets which need to be sent.

There are other physical parameters besides mass which could be adjusted to damp latency induced instability. These include friction viscous drag (force proportional to & opposing velocity) & friction (a force opposing velocity and of constant magnitude if velocity non-zero, otherwise of equal magnitude to & opposing the applied force up to a limit).

Instead of using the parameters related to the physics of the haptic effector, those related to the coupling between the haptic effectors could be used. For example, decreasing the strength with which each effector tries to jump to the position of the other can reduce instability.

The different damping means mentioned above could be applied in combination as well as individually.

Other methods of haptic transmission (e.g. measuring reaction force from the environment at one effector, transmitting it and outputting it via the other effector) could be used instead of coercing the effector handpieces to each-other's position using a simulated spring force.

Other methods of networking latency measurement (e.g. ISDN, TCP over IP or RS232 serial over a modem to modem link over PSTN) could be used instead of UDP.

Other methods of network latency measurement (e.g. 'ping' time, network performance metrics from other computers on the network, or single direction measurement by synchronised clocks) could be used.

Other forms of adjustable instability suppression could be adjusted in response to latency measurements.

The simulated mass (or other damping parameter) could be adjusted automatically by means other than latency measurement. For example it could be automatically increased whenever the onset of oscillations indicating instability are detected and gradually decreased when no instability has been detected for a period of time.
The forms of instability damping described could be used without the automatic adjustment, e.g. the simulated mass kept at a value which predefined or set by the user.

Instability is also affected by how a user responds to the effectors motion. In our trials, some users were able to learn to dampen some instability themselves. Such users might therefore prefer less damping so as to increase speed & detail of feeling at the expense of stability. Therefore it is proposed to include in the calculation of the degree of damping a parameter which the user has some control over.

Alternatively the system could adapt the degree of damping to fit the user automatically (e.g. by decreasing the damping until the start of oscillations indicating instability are detected).

The per-user parameters, whether manually or automatically set, could be stored for future use.
The adjustments made to the position parameters can be combined with other senses. Most obviously is a visual representation of a haptic scene but also with sound, smell and other perceptive stimuli.

## Claims

1. A method of activating a haptic output device of the kind responsive to signals defining directional force comprising receiving a series of signals defining a multiplicity of data packets, each packet defining a directional force applied at one location for transmission to the current location, determining from packet data the information defining a position to which a haptic output device is expected to move, using current positional data to generate output signals defining force and direction and applying a damping factor to said force and direction signals to slow the rate of movement from a previously defined position towards the current defined position.

2. The method of claim 1 further including signalling in each direction whereby haptic forces applied at one device in reaction to an applied force towards the current defined position are reflected to a corresponding device in the form of current positional signals in a series of return data packets.

3. The method of claim 1 or claim 2 further including calculating the damping factor from determined parameters of a transmission network on which said data packets are carried.

4. The method of claim 3 in which latency of the network is determined by transmitting a data packet to the network said packet including a time determinant identity, reflecting the data packet through the network and comparing the received time with the transmitted time to provide a latency parameter from which said damping factor is determined.

5. The method of claim 4 in which at least some transmitted packets carrying positional data also include the time determinant data, some of said time determinant data being returned to permit updating of the latency parameter.

6. The method of any one of claims 1 to 5 further including applying a weighting factor in addition to the damping factor, the weighting factor being derived from other parameters of the interconnection such as resilience.

7. The method of any one of claims 1 to 6 further including applying a modifying factor to the force and direction signals, said modifying factor being derived from pre determined user preference data.

8. An interactive haptic output terminal in combination with a bi-directional transmission arrangement, the terminal comprising at least a haptic output device and control means, said control means receiving signals from said haptic output device to determine a current position for said device, and to determine from signals received from said transmission arrangement a preferred current position for said haptic output device, said control mean determining an output force and direction required to move said haptic output device from the current position to the preferred position and further modifying said output force and direction using a damping factor to slow apparent movement between the positions and outputting signals defining the modified force and direction.

9. A terminal as claimed in claim 8 in which the control means receives signals from the haptic output device, said signals containing data defining the position of said device at any particular time, said control means converting said data to signals for transmission to said bi-directional transmission arrangement at predetermined intervals.

10. A terminal as claimed in claim 8 or claim 9 in which the signals defining a preferred current position are generated by an environment simulator, for example a programmed computer.

11. A terminal as claimed in claim 8 or claim 9 in which the signals defining a preferred current position are generated by a corresponding interactive output terminal at the opposed end of the transmission arrangement.

12. A terminal as claimed in any one of claims 8 to 11 in which a series of packets defining preferred position are received, each packet defining a directional force applied at one location for transmission to the current location, the control means includes means to determine from packet data the sequence of transmission and re-ordering the data into a numerically correct series, extrapolating from previously received packets an anticipated linear movement to be defined by subsequently received packets and applying output directional force signals corresponding to said anticipated linear movement in respect of any missing data packet.

13. A method of activating a haptic output device as claimed in any one of claims 1 to 7 including signalling in each direction whereby haptic forces applied at one device in reaction to an applied force towards the current defined position are reflected to a corresponding device in the form of current positional signals in a series of return data packets.

14. An interactive haptic output terminal in combination with a bi-directional transmission arrangement, the terminal comprising at least a haptic output device and control means, said control means receiving signals from said haptic output device to determine a current position for said device, and to determine from signals received from said transmission arrangement a preferred current position for said haptic output device, said control mean determining an output force and direction required to move said haptic output device from the current position to the preferred position and further modifying said output force and direction by applying a damping factor to slow apparent movement between the positions and outputting signals defining the modified force and direction.

15. A terminal as claimed in claim 14 in which the control means receives signals from the haptic output device containing data defining the position of said device at any particular time and converts said data to signals for transmission to said bi-directional transmission arrangement at predetermined intervals.

16. A terminal as claimed in claim 14 or claim 15 in which the signals defining a preferred current position are generated by an environment simulator, for example a programmed computer.

17. A terminal as claimed in claim 14 or claim 15 in which the signals defining a preferred current position are generated by a corresponding interactive output terminal at the opposed end of the transmission arrangement.

18. A terminal as claimed in any one of claims 14 to 17 in which a series of packets defining preferred position are received, each packet defining a directional force applied at one location for transmission to the current location, the control means including means to determine from packet data the sequence of transmission and re-ordering the data into a numerically correct series, extrapolating from previously received packets an anticipated linear movement to be defined by subsequently received packets and applying output directional force signals corresponding to said anticipated linear movement in respect of any missing data packet.
